# EUROPEAN PATENT APPLICATION

(11) **EP 4 783 625 A1**
(43) Date of publication of application: **29.07.2026**
(21) Application number: 24870373.8
(22) Date of filing: 04.09.2024
(51) Int. Cl.: H04W 4/38, G01S 7/02, G01S 13/00

(54) **WIRELESS SENSING METHOD AND APPARATUS**

(30) Priority: 28.09.2023 CN 202311279386
(71) Applicant: HUAWEI TECHNOLOGIES CO., LTD., Shenzhen 518129 (CN)
(72) Inventor: MA, Zixiang, Shenzhen, Guangdong 518129 (CN); ZHOU, Zhihui, Shenzhen, Guangdong 518129 (CN); NIU, Le, Shenzhen, Guangdong 518129 (CN)
(74) Representative: Gill Jennings & Every LLP
(86) International application number: PCT/CN2024/116814
(87) International publication number: WO 2025/066827

(57) **Abstract**

A wireless sensing method and an apparatus are disclosed, and belong to the field of sensing technologies. An AP in a WLAN sends a beacon frame through a first antenna, and receives an echo signal through a second antenna, where the echo signal is obtained by reflecting or scattering the beacon frame. Then, the AP performs environment sensing based on the received echo signal. In this application, because the AP has a capability of sending and receiving a packet, the same AP sends a beacon frame and receives an echo signal of the beacon frame. A signal transmit/receive location is always known to the AP. Therefore, environment sensing precision is improved, a deployment location of the AP is not limited, and the AP can be flexibly applied to various scenarios. In addition, the beacon frame is periodically sent to announce existence of the AP. Therefore, the AP implements environment sensing through the beacon frame without additional packet sending, so that channel resources can be saved, and environment sensing can be completed in a normal communication process, thereby implementing integrated communication and sensing.

## Description

This application claims priority to Chinese Patent Application No. 202311279386.X, filed on September 28, 2023 and entitled "WIRELESS SENSING METHOD AND APPARATUS", which is incorporated herein by reference in its entirety.

### TECHNICAL FIELD

This application relates to the field of sensing technologies, and in particular, to a wireless sensing method and an apparatus.

### BACKGROUND

Wireless sensing is a technology that senses a person or an object in an environment by measuring a change of a wireless signal after the wireless signal is scattered and/or reflected by the person or the object. How to implement environment sensing based on a wireless local area network (wireless local area network, WLAN), for example, implement personnel intrusion detection or personnel breathing detection in an environment, is currently a research focus.

### SUMMARY

This application provides a wireless sensing method and an apparatus, to implement environment sensing based on a WLAN.

According to a first aspect, a wireless sensing method is provided. The method includes: An access point (access point, AP) in a WLAN sends a beacon frame through a first antenna. The AP receives an echo signal through a second antenna, where the echo signal is obtained by reflecting or scattering the beacon frame. The AP performs environment sensing based on the received echo signal.

In this application, because the AP has a capability of sending and receiving a packet, the same AP sends a beacon frame and receives an echo signal of the beacon frame. A signal transmit/receive location is always known to the AP. Therefore, environment sensing precision is improved, a deployment location of the AP is not limited, and the AP can be flexibly applied to various scenarios. In addition, the AP implements environment sensing through the beacon frame. The beacon frame is periodically sent to announce existence of the AP. Therefore, environment sensing is implemented through the beacon frame without additional packet sending, so that channel resources can be saved, and environment sensing can be completed in a normal communication process, thereby implementing integrated communication and sensing.

Optionally, the first antenna and the second antenna are different antennas that are connected to a same baseband circuit of the AP.

In this implementation, because the first antenna and the second antenna are connected to the same baseband circuit of the AP by using a same radio frequency circuit, a same local oscillator design of a transmit circuit and a receive circuit can be implemented, so that a sampling frequency and a carrier frequency between the transmit end and the receive end are consistent, and a problem that a sampling frequency offset and a carrier frequency offset affect CSI quality of a received signal does not exist, thereby improving environment sensing precision. In addition, internal time synchronization is not required, thereby improving environment sensing efficiency.

Optionally, the first antenna and the second antenna are respectively connected to different baseband circuits of the AP.

Optionally, an implementation in which the AP sends the beacon frame through the first antenna includes: The AP sends the beacon frame on both a primary channel and a secondary channel through the first antenna.

In this application, the AP may copy the beacon frame transmitted on the primary channel to one or more secondary channels for simultaneous transmission, so that the beacon frame is transmitted on a larger bandwidth, and the AP can receive, on the larger bandwidth, an echo signal obtained by reflecting or scattering the beacon frame by the environment, thereby improving sensing precision.

Optionally, an implementation in which the AP performs environment sensing based on the received echo signal includes: The AP calculates channel state information (channel state information, CSI) based on the received echo signal. The AP performs amplitude-phase compensation on the CSI based on a preset amplitude-phase compensation relationship and an automatic gain control (automatic gain control, AGC) level corresponding to the echo signal, where the amplitude-phase compensation relationship includes amplitude compensation values and/or phase compensation values corresponding to a plurality of AGC levels. The AP performs environment sensing based on the CSI on which the amplitude-phase compensation is performed.

In this application, the amplitude-phase compensation relationship is established in advance, and the amplitude-phase compensation is performed, based on the AGC level corresponding to the echo signal, on the CSI obtained through calculation based on the echo signal, so that impact of a dynamic variable of the CSI introduced by the AGC level on environment sensing may be eliminated as much as possible.

According to a second aspect, an AP in a WLAN is provided. The AP includes a plurality of functional modules, and the plurality of functional modules interact with each other to implement the method according to the first aspect and the implementations of the first aspect. The plurality of functional modules may be implemented based on software, hardware, or a combination of software and hardware, and the plurality of functional modules may be randomly combined or divided according to a specific implementation.

For example, the AP includes a sending module, a receiving module, and a processing module. The sending module is configured to send a beacon frame through a first antenna. The receiving module is configured to receive an echo signal through a second antenna, where the echo signal is obtained by reflecting or scattering the beacon frame. The processing module is configured to perform environment sensing based on the received echo signal.

Optionally, the first antenna and the second antenna are different antennas that are connected to a same baseband circuit of the AP.

Optionally, the first antenna and the second antenna are respectively connected to different baseband circuits of the AP.

Optionally, the sending module is specifically configured to send the beacon frame on both a primary channel and a secondary channel through the first antenna.

Optionally, the processing module is specifically configured to: calculate CSI based on the received echo signal; perform amplitude and phase compensation on the CSI based on a preset amplitude and phase compensation relationship and an AGC level corresponding to the echo signal, where the amplitude and phase compensation relationship includes amplitude compensation values and/or phase compensation values corresponding to a plurality of AGC levels; and perform environment sensing based on the CSI on which the amplitude and phase compensation is performed.

According to a third aspect, an AP in a WLAN is provided. The AP includes a processor, a memory, a transceiver, and a plurality of antennas.

The transceiver is configured to send a beacon frame through a first antenna in the plurality of antennas. The transceiver is further configured to receive an echo signal through a second antenna in the plurality of antennas, where the echo signal is obtained by reflecting or scattering the beacon frame. The processor is configured to invoke a computer program stored in the memory, to perform environment sensing based on the received echo signal.

Optionally, the first antenna and the second antenna are different antennas of the AP. For example, the first antenna and the second antenna are different antennas that are connected to a same baseband circuit of the AP. Alternatively, the first antenna and the second antenna are respectively connected to different baseband circuits of the AP.

According to a fourth aspect, a computer-readable storage medium is provided. The computer-readable storage medium stores instructions. When the instructions are executed by a processor of an AP, the method according to the first aspect and the implementations of the first aspect is implemented.

According to a fifth aspect, a chip is provided. The chip includes a programmable logic circuit and/or program instructions. When the chip runs, the method according to the first aspect and the implementations of the first aspect is implemented.

### BRIEF DESCRIPTION OF DRAWINGS

FIG. 1 is a diagram of an application scenario according to an embodiment of this application;
FIG. 2 is a diagram of a hardware structure of an AP according to an embodiment of this application;
FIG. 3 is a diagram of another hardware structure of an AP according to an embodiment of this application;
FIG. 4 is a schematic flowchart of a wireless sensing method according to an embodiment of this application; and
FIG. 5 is a diagram of a structure of an AP according to an embodiment of this application.

### DESCRIPTION OF EMBODIMENTS

To make the objectives, technical solutions, and advantages of this application clearer, the following further describes the implementations of this application in detail with reference to the accompanying drawings.

A WLAN may use CSI to perform environment sensing, which is referred to as CSI sensing for short. CSI data includes channel characteristics such as scattering, fading, and energy attenuation with a distance. Signal propagation is affected when an object moves in an environment, and these are recorded by the CSI as a channel changes. Therefore, functions such as detection, positioning, and identification can be implemented by using the CSI. A CSI sensing technology has many advantages, such as indoor universality, privacy protection, fine-grained sensing, and environment robustness. The CSI sensing technology also has many application scenarios, such as health monitoring and smart home.

The Institute of Electrical and Electronics Engineers (Institute of Electrical and Electronics Engineers, IEEE) 802.11bf protocol draft proposes to provide a wireless sensing function for a WLAN technology, and minimize impact on communication. Currently, the IEEE 802.1 1bf protocol draft mainly discusses multi-station networking to obtain CSI data. The multi-station networking may be networking between a WLAN device that supports sending of a WLAN signal and a WLAN device that supports CSI measurement, for example, networking between APs, networking between an AP and an internet of things (internet of things, IOT) device, or networking between IOT devices. In short, in a multi-station networking scenario, one WLAN device sends a radio signal, and another WLAN device calculates CSI based on the received radio signal, to further implement environment sensing.

For example, one WLAN device periodically sends a radio signal, and another WLAN device calculates CSI based on the received radio signal, and analyzes continuous CSI data obtained within a period of time in a model-based manner or a learning-based manner, to sense human body activity in an environment. The model-based manner is to model human body activity based on some physical model signals, for example, a Fresnel zone theory. The learning-based manner is driven by data and machine learning. For some human body activities that are difficult to model, for example, human body falling state identification, a large amount of data may be collected to train a machine learning model for identification.

However, both the model-based manner and the learning-based manner are related to a topology structure of the multi-station networking. For the model-based manner, environment sensing precision is affected if the topology structure is unknown. However, in the learning-based manner, a machine learning model obtained through training previously may become invalid due to a topology structure change. Therefore, when the topology structure of the multi-station networking is unknown, a technology in which two WLAN devices separately send and receive signals may not implement accurate environment sensing.

In addition, in the multi-station networking scenario, a plurality of WLAN devices need to measure CSI data with each other. On one hand, if a clock of a receive end is not synchronized with that of a transmit end, a sampling frequency and a carrier frequency of the receive end may be different from those of the transmit end. CSI quality is affected by factors such as a sampling frequency offset (sampling frequency offset, SFO) and a carrier frequency offset (carrier frequency offset, CFO), thereby affecting environment sensing precision. On the other hand, different WLAN devices may be limited by inter-frequency networking or a carrier-sense multiple access with collision avoidance (carrier-sense multiple access with collision avoidance, CSMA/CA) mechanism, and cannot obtain a large amount of CSI data relative to a same WLAN device within a period of time. As a result, environment sensing precision is low.

Based on this, this application provides a technical solution applied to a WLAN. An AP sends a beacon (beacon) frame through a first antenna, receives, through a second antenna, an echo (Echo) signal obtained by reflecting or scattering the beacon frame, and further performs environment sensing based on the received echo signal. The first antenna and the second antenna may be different antennas of the AP. In this application, because the AP has a capability of sending and receiving a packet, the same AP sends a beacon frame and receives an echo signal of the beacon frame. A signal transmit/receive location is always known to the AP. Therefore, environment sensing precision is improved, a deployment location of the AP is not limited, and the AP can be flexibly applied to various scenarios. In addition, the AP implements environment sensing through the beacon frame. The beacon frame is periodically sent to announce existence of the AP. Therefore, environment sensing is implemented through the beacon frame without additional packet sending, so that channel resources can be saved, and environment sensing can be completed in a normal communication process, thereby implementing integrated communication and sensing.

The following describes the technical solutions of this application in detail from a plurality of perspectives such as an application scenario, a hardware structure, a method procedure, and a virtual apparatus.

The following describes, by using examples, an application scenario and a hardware structure related to embodiments of this application.

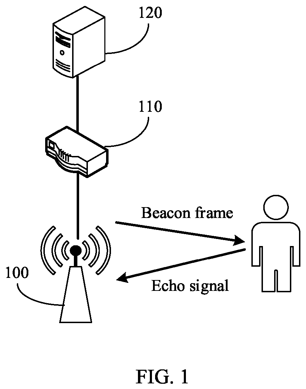

The wireless sensing method provided in embodiments of this application may be applied to various application scenarios in which a WLAN is deployed, for example, intrusion detection and breathing detection in an environment, and may be applied to both an indoor environment and an outdoor environment. For example, FIG. 1 is a diagram of an application scenario according to an embodiment of this application. As shown in FIG. 1, the application scenario includes an AP 100. The AP 100 is a network device that supports a WLAN protocol. For example, the AP 100 may be a wireless router. The AP 100 is configured to provide a WLAN protocol-based wireless access service for a station (station, STA). The WLAN protocol defines IEEE 802.11 series standards.

Optionally, an operating frequency band supported by the AP 100 includes but is not limited to a 2.4 gigahertz (GHz) frequency band, a 3.6 GHz frequency band, a 4.9 GHz frequency band, a 5 GHz frequency band, a 6 GHz frequency band, or a 60 GHz frequency band. The 2.4 GHz frequency band includes 2.4 GHz to 2.4835 GHz, and the 5 GHz frequency band includes 5.150 GHz to 5.350 GHz and 5.725 GHz to 5.850 GHz. To avoid co-channel interference, available frequency bands in the WLAN are divided into independent channels. In other words, frequency bands do not overlap between channels. For example, the 2.4 GHz frequency band has three independent channels, including a channel 1, a channel 6, and a channel 11. Therefore, a maximum of three inter-frequency WLANs can be simultaneously deployed on the 2.4 GHz frequency band. In embodiments of this application, "x" in a "channel x" refers to a channel number defined in the WLAN protocol. For example, the 5 GHz frequency band includes a channel 36, a channel 40, a channel 44, a channel 48, and the like.

An operating channel of the AP 100 includes at least a primary channel. Optionally, the operating channel of the AP 100 further includes a secondary channel. In this embodiment of this application, the operating channel of the AP 100 is a complete WLAN channel, for example, a 20 megahertz (MHz) WLAN channel, or a WLAN channel with a larger bandwidth (for example, 40 MHz, 80 MHz, or 160 MHz). A channel whose bandwidth is greater than 20 MHz may be referred to as a large-bandwidth channel, and the large-bandwidth channel includes a plurality of consecutive 20 MHz channels. For example, on the 5 GHz frequency band, a 40 MHz large-bandwidth channel may include a 20 MHz channel 36 and a 20 MHz channel 40, and is represented as a channel <36,40>. If the operating channel of the AP 100 is a large-bandwidth channel, the operating channel of the AP 100 may include a primary channel and a secondary channel. Any 20 MHz channel in the operating channel of the AP 100 may be set as the primary channel. A channel other than the primary channel in the operating channel of the AP 100 is the secondary channel. To improve WLAN service quality, the AP may use a large-bandwidth channel as the operating channel, for example, a 40 MHz or larger-bandwidth WLAN channel. If the operating channel of the AP 100 is configured as a large-bandwidth channel, the AP 100 may use a part or an entirety of the operating channel bandwidth for transmission each time the AP 100 transmits a WLAN frame, but the primary channel needs to be included. For example, if the operating channel of the AP 100 is configured as an 80 MHz channel <36,40,44,48>, and the primary channel is a channel 36, the AP 100 may transmit a WLAN frame on the entire 80 MHz channel, or transmit a WLAN frame on the 40 MHz channel <36,40>, or transmit a WLAN frame on the 20 MHz channel 36. The WLAN frame includes a management frame, a control frame, and a data frame. The management frame includes but is not limited to a beacon frame.

In this embodiment of this application, the AP 100 is configured to implement single-base sensing. In other words, there is only one device participating in environment sensing. The AP 100 senses an environment by sending and receiving a signal independently. This is similar to a working manner of a conventional radar. For example, refer to FIG. 1. The AP 100 is configured to send a beacon frame. The beacon frame is scattered and/or reflected by an environment, and an echo signal is formed. Then, the AP 100 may receive the echo signal, and further sense the environment by analyzing the received echo signal.

Optionally, refer to FIG. 1. The application scenario further includes a radio controller 110 and/or a server 120. The radio controller 110 is configured to manage the AP 100, including performing radio frequency optimization, air interface optimization, security authentication, and the like on the AP 100. The radio controller 110 may be, for example, an access controller (access controller, AC). The server 120 is configured to provide a service for the AP 100, including but not limited to an access service. In this embodiment of this application, after receiving the echo signal of the beacon frame, the AP 100 may independently complete environment sensing, or may complete environment sensing in cooperation with the radio controller 110 or the server 120. For example, the AP 100 may send collected CSI data to the radio controller 110 or the server 120, and the radio controller 110 or the server 120 senses an environment change by analyzing a CSI data change.

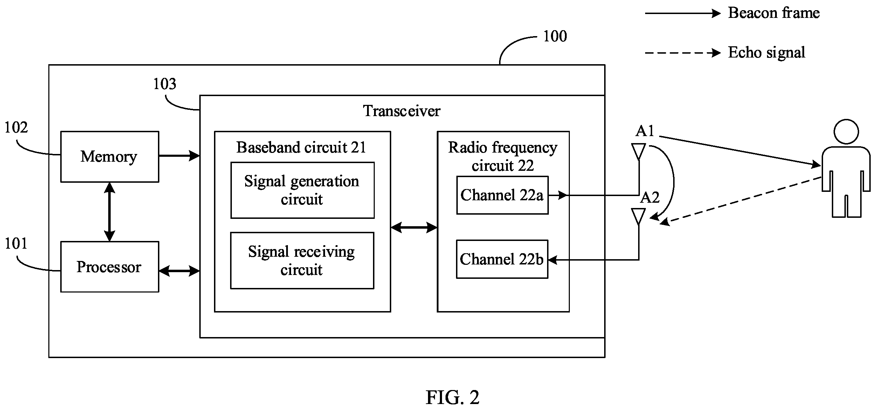

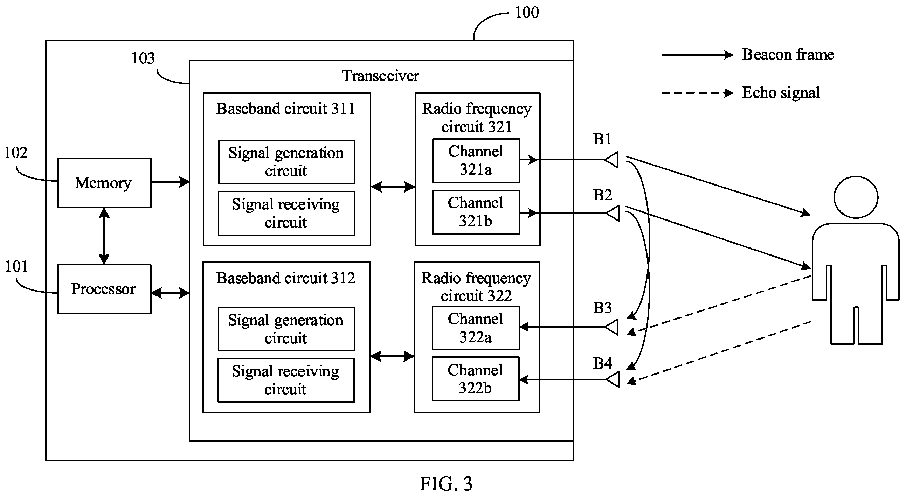

Optionally, the AP 100 includes a plurality of antennas. For example, FIG. 2 and FIG. 3 are respectively diagrams of hardware structures of an AP according to an embodiment of this application. As shown in FIG. 2 or FIG. 3, the AP 100 includes a processor 101, a memory 102, a transceiver 103, and a plurality of antennas. For example, refer to FIG. 2. The AP 100 includes two antennas, which are respectively an antenna A1 and an antenna A2. For another example, refer to FIG. 3. The AP 100 includes four antennas, which are respectively an antenna B1, an antenna B2, an antenna B3, and an antenna B4. Quantities of antennas in FIG. 2 and FIG. 3 are merely used as examples for description, and are not used as a limitation on the AP provided in this embodiment of this application.

The processor 101, the memory 102, and the transceiver 103 are connected through a communication bus (not shown in the figure).

The processor 101 may be a general-purpose central processing unit (central processing unit, CPU), an application-specific integrated circuit (application-specific integrated circuit, ASIC), or one or more integrated circuits configured to control execution of the solutions in this application. The processor 101 may be a single-core (single-CPU) processor, or may be a multicore (multi-CPU) processor. The processor 101 herein may be one or more devices, circuits, and/or processing cores configured to process data (for example, computer program instructions).

The memory 102 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, or the like), a magnetic disk or another magnetic storage device, or may be any other medium that can be used to carry or store expected program code in a form of an instruction or a data structure and that can be accessed by a computer. However, this is not limited thereto. The memory 102 may exist independently, and is connected to the processor 101 through the communication bus. Alternatively, the memory 102 may be integrated with the processor 101.

In this embodiment of this application, the memory 102 is configured to store a computer program, and the computer program includes a program instruction. The processor 101 is configured to invoke the computer program, and cooperate with the transceiver 103 to implement the wireless sensing method provided in the following embodiments of this application.

The transceiver 103 is configured to perform transmit and receive actions of the device. Optionally, the transceiver 103 includes one or more baseband circuits and one or more radio frequency circuits. For example, refer to FIG. 2. The transceiver 103 includes one baseband circuit (a baseband circuit 21) and one radio frequency circuit (a radio frequency circuit 22). For another example, refer to FIG. 3. The transceiver 103 includes two baseband circuits (a baseband circuit 311 and a baseband circuit 312) and two radio frequency circuits (a radio frequency circuit 321 and a radio frequency circuit 322), where the baseband circuit 311 is connected to the radio frequency circuit 321, and the baseband circuit 312 is connected to the radio frequency circuit 322. In FIG. 3, an example in which a plurality of baseband circuits are integrated into a same transceiver 103 is used for description. Alternatively, the AP 100 may include a plurality of transceivers, and the plurality of baseband circuits may be independently deployed in different transceivers of the AP 100.

Refer to FIG. 2 or FIG. 3. Each baseband circuit includes a signal generation circuit and a signal receiving circuit. The signal generation circuit and the signal receiving circuit may be two independent circuits, or some circuits may be shared between the signal generation circuit and the signal receiving circuit. The signal generation circuit is configured to generate and transmit a signal. The signal receiving circuit is configured to receive and process the signal. The baseband circuit shown in FIG. 2 and FIG. 3 is implemented based on hardware. In some implementations, a baseband processing function may also be implemented based on software. For example, the baseband processing function may be implemented in a processor. In other words, a baseband processing module is integrated in the processor. This is not limited in this embodiment of this application. For ease of differentiation, in this application, hardware implementing the baseband processing function is referred to as a baseband circuit, and software implementing the baseband processing function is referred to as the baseband processing module.

Optionally, the radio frequency circuit may include one or more channels (chain). The baseband circuit may enable a channel in the radio frequency circuit to be a transmit (transmit, Tx) channel or a receive (receive, Rx) channel. Optionally, the transmit channel may include a filter, a digital-to-analog converter, a power amplifier, and the like. The receive channel may include a filter, an analog-to-digital converter, a power amplifier, and the like. The transmit channel and the receive channel may be independent of each other, or may share some components.

For example, refer to FIG. 2. The radio frequency circuit 22 includes a channel 22a and a channel 22b. When performing environment sensing, the AP 100 may enable the channel 22a as the transmit channel and enable the channel 22b as the receive channel by using the baseband circuit 21. The channel 22a is connected to the signal generation circuit, and the channel 22a is connected to the antenna A1. In other words, the antenna A1 is a transmit antenna. The channel 22b is connected to the signal receiving circuit, and the channel 22b is connected to the antenna A2. In other words, the antenna A2 is a receive antenna. A signal generated by the signal generation circuit in the baseband circuit 21 is transmitted on the channel 22a in the radio frequency circuit 22, and is sent by the antenna A1. The signal received by the antenna A2 is transmitted to the signal receiving circuit in the baseband circuit 21 through the channel 22b in the radio frequency circuit 22, and then the signal is processed by the signal receiving circuit or continues to be transmitted to the processor 101 for processing by the processor 101. For example, the antenna A1 may send a beacon frame, and the antenna A2 may receive the beacon frame and an echo signal generated by scattering or reflecting the beacon frame by an environment. In FIG. 2, an example in which the radio frequency circuit 22 includes two channels is used for description. The radio frequency circuit 22 may further include three or more channels. Correspondingly, the radio frequency circuit 22 may be connected to three or more antennas. When performing environment sensing, the AP 100 may enable, by using the baseband circuit 21, one antenna connected to the radio frequency circuit 22 as a transmit antenna and other antennas as receive antennas, or may enable a plurality of antennas connected to the radio frequency circuit 22 as transmit antennas and other antennas as receive antennas, provided that it is ensured that the plurality of antennas connected to the baseband circuit 21 by using the radio frequency circuit 22 include both a transmit antenna and a receive antenna.

For another example, refer to FIG. 3. The radio frequency circuit 321 includes a channel 321a and a channel 321b. When performing environment sensing, the AP 100 may enable, by using the baseband circuit 311, the channel 321a and the channel 321b to be a transmit channel, and enable, by using the baseband circuit 312, the channel 322a and the channel 322b to be a receive channel. The channel 321a and the channel 321b are separately connected to the signal generation circuit, the channel 321a is connected to the antenna B1, and the channel 321b is connected to the antenna B2. That is, the antenna B1 and the antenna B2 are transmit antennas. The channel 322a and the channel 322b are separately connected to the signal receiving circuit, the channel 322a is connected to the antenna B3, and the channel 322b is connected to the antenna B4. That is, the antenna B3 and the antenna B4 are receive antennas. Signals generated by the signal generation circuit in the baseband circuit 311 are transmitted on the channel 321a and the channel 321b in the radio frequency circuit 321, and are sent by the antenna B1 and the antenna B2, respectively. Signals received by the antenna B3 and the antenna B4 are respectively transmitted to the signal receiving circuit in the baseband circuit 312 through the channel 322a and the channel 322b in the radio frequency circuit 322, and then the signals are processed by the signal receiving circuit or continue to be transmitted to the processor 101 for processing by the processor 101. For example, the antenna B1 and the antenna B2 may send a beacon frame, and the antenna B3 and the antenna B4 may receive the beacon frame and an echo signal generated by scattering or reflecting the beacon frame by an environment. In FIG. 3, an example in which both the radio frequency circuit 321 and the radio frequency circuit 322 include two channels is used for description. The radio frequency circuit 321 and the radio frequency circuit 322 may alternatively include one, three, or more channels. Correspondingly, the radio frequency circuit 321 and the radio frequency circuit 322 may be connected to one, three, or more antennas. When performing environment sensing, the AP 100 may enable, by using the baseband circuit 311, one or more antennas connected to the radio frequency circuit 321 as transmit antennas, and enable, by using the baseband circuit 312, one or more antennas connected to the radio frequency circuit 322 as receive antennas, or may enable, by using the baseband circuit 311, one or more antennas connected to the radio frequency circuit 321 as receive antennas, and may enable, by using the baseband circuit 312, one or more antennas connected to the radio frequency circuit 322 as transmit antennas, provided that it is ensured that a transmit antenna exists in the antenna connected to the baseband circuit 311 by using the radio frequency circuit 321, and a receive antenna exists in the antenna connected to the baseband circuit 312 by using the radio frequency circuit 322.

The following describes a method procedure in embodiments of this application by using an example.

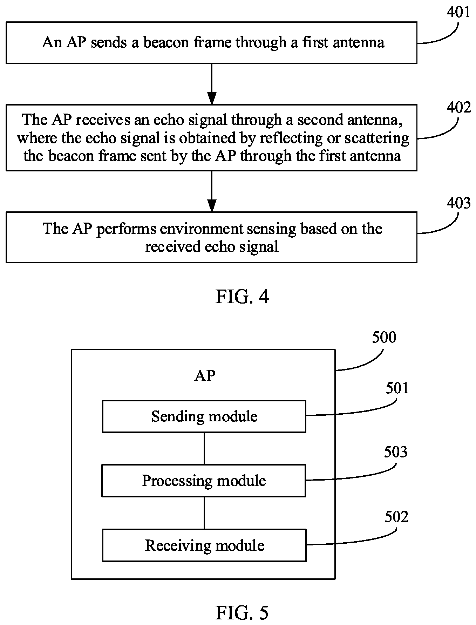

The wireless sensing method provided in this embodiment of this application may be applied to an AP in a WLAN. The AP includes a plurality of antennas. For example, the AP may be the AP 100 shown in any one of FIG. 1 to FIG. 3. For example, FIG. 4 is a schematic flowchart of a wireless sensing method according to an embodiment of this application. As shown in FIG. 4, the method includes but is not limited to the following step 401 to step 403.

Step 401: An AP sends a beacon frame through a first antenna.

Optionally, the AP periodically sends the beacon frame through the first antenna to announce existence of a WLAN, so that a STA accesses the WLAN.

Optionally, an operating channel of the AP is a high-bandwidth channel, including a primary channel and a secondary channel. When the operating channel of the AP is a high-bandwidth channel, the beacon frame is generally sent only on the primary channel. To improve sensing precision, the AP may send the beacon frame on both the primary channel and the secondary channel through the first antenna. For example, if a bandwidth of the operating channel of the AP is 80 MHz, and one 20 MHz primary channel and three 20 MHz secondary channels are included, the AP may copy the beacon frame transmitted on the primary channel to one or more secondary channels (for example, all secondary channels) for simultaneous transmission, so that the beacon frame is transmitted on a larger bandwidth, and the AP can receive, on the larger bandwidth, an echo signal obtained by reflecting or scattering the beacon frame by the environment, thereby improving sensing precision. A larger bandwidth of a received signal indicates higher sensing precision. Specifically, a larger bandwidth of the received signal indicates a higher time resolution of the AP on the received signal in time domain, and a larger quantity of subcarriers of the received signal obtained in frequency domain. For example, in time domain, a propagation time of the echo signal in a medium can reflect a distance between a sensing target and the AP. Therefore, a higher time resolution of the received signal indicates higher precision of the distance between the sensing target and the AP that is obtained through calculation, thereby improving positioning precision of the sensing target, that is, improving sensing precision.

Optionally, the AP may further reduce a packet transmission time interval of the beacon frame in an environment sensing process. In other words, the AP sends more beacon frames in the environment sensing process, so that the AP can receive more echo signals obtained by reflecting or scattering the beacon frames by the environment, and can obtain more environment sensing information, to improve sensing precision.

Step 402: The AP receives an echo signal through a second antenna, where the echo signal is obtained by reflecting or scattering the beacon frame sent by the AP through the first antenna.

It should be noted that the first antenna in this embodiment of this application indicates an antenna used by the AP to send a beacon frame, and does not specifically refer to an antenna of the AP. The first antenna may be one antenna of the AP, or may be a plurality of antennas of the AP. A quantity of antennas used by the AP to send the beacon frame is not limited in this embodiment of this application. Similarly, the second antenna in this embodiment of this application indicates an antenna used by the AP to receive an echo signal obtained by reflecting or scattering the beacon frame, and does not specifically refer to an antenna of the AP. The second antenna may be one antenna of the AP, or may be a plurality of antennas of the AP. A quantity of antennas used by the AP to receive the echo signal is not limited in this embodiment of this application.

Optionally, before sending the beacon frame through the first antenna (that is, before performing step 401), the AP sets the first antenna as a transmit antenna, and sets the second antenna as a receive antenna, to wait for receiving the echo signal obtained by reflecting or scattering the beacon frame sent through the first antenna.

In this embodiment of this application, an example in which the first antenna and the second antenna are different antennas of the AP is used for description.

In a possible implementation, the first antenna and the second antenna are different antennas that are connected to a same baseband circuit of the AP. For example, a structure of the AP is shown in FIG. 2. The first antenna may be an antenna A1, the second antenna may be an antenna A2, and the first antenna and the second antenna are connected to a same baseband circuit 21 by using a radio frequency circuit 22. The AP 100 may send a beacon frame through the antenna A1, and receive an echo signal through the antenna A2.

In this implementation, the AP may be provided with a communication mode and a sensing mode. When the AP is in the communication mode, transmit/receive states of all antennas connected to a same baseband circuit are usually the same. For example, all the antennas are enabled as transmit antennas to send signals generated by the baseband circuit, or all the antennas are enabled as receive antennas to receive external signals. In this way, signal transmit/receive efficiency of the AP can be improved. When the AP is in the sensing mode, the plurality of antennas connected to the same baseband circuit include a transmit antenna and a receive antenna. In this way, a signal sent by the transmit antenna of the AP can be received by the receive antenna, thereby implementing environment sensing.

Optionally, the AP may periodically perform environment sensing, for example, perform environment sensing once every 5 minutes. Alternatively, the AP may perform environment sensing under triggering of a sensing instruction. The sensing instruction may be manually triggered on the AP, or may be a control instruction sent by another device to the AP. When the AP starts to perform environment sensing, the AP may switch from the communication mode to the sensing mode. Correspondingly, after ending environment sensing, the AP may immediately switch from the sensing mode to the communication mode, to improve communication efficiency of the AP.

In this implementation, because the first antenna and the second antenna are connected to the same baseband circuit of the AP by using a same radio frequency circuit, a same local oscillator design of a transmit circuit and a receive circuit can be implemented, so that a sampling frequency and a carrier frequency between the transmit end and the receive end are consistent, and a problem that a sampling frequency offset and a carrier frequency offset affect CSI quality of a received signal does not exist, thereby improving environment sensing precision. In addition, internal time synchronization is not required, thereby improving environment sensing efficiency.

In another possible implementation, the first antenna and the second antenna are respectively connected to different baseband circuits of the AP. Optionally, the first antenna is connected to a first baseband circuit of the AP by using a first radio frequency circuit, and the second antenna is connected to a second baseband circuit of the AP by using a second radio frequency circuit. For example, a structure of the AP is shown in FIG. 3. The first antenna may be an antenna B1 and an antenna B2, and the second antenna may be an antenna B3 and an antenna B4. The first radio frequency circuit may be a radio frequency circuit 321, and the first baseband circuit may be a baseband circuit 311. That is, the first antenna (the antenna B1 and the antenna B2) is connected to the baseband circuit 311 by using the radio frequency circuit 321. The second radio frequency circuit may be a radio frequency circuit 322, and the second baseband circuit may be a baseband circuit 312. That is, the second antenna (the antenna B3 and the antenna B4) is connected to the baseband circuit 312 by using the radio frequency circuit 322. The AP 100 may send a beacon frame through the antenna B1 and the antenna B2, and receive an echo signal through the antenna B3 and the antenna B4.

Optionally, when operating frequencies of the first radio frequency circuit and the second radio frequency circuit are different, before sending the beacon frame through the first antenna (that is, before performing step 401), the AP needs to switch an operating frequency of the first radio frequency circuit and/or an operating frequency of the second radio frequency circuit, so that the operating frequencies of the first radio frequency circuit and the second radio frequency circuit are the same. For example, if the operating frequency of the first radio frequency circuit is 5.2 GHz, and the operating frequency of the second radio frequency circuit is 5.4 GHz, the operating frequency of the second radio frequency circuit may be switched from 5.4 GHz to 5.2 GHz, or the operating frequency of the first radio frequency circuit may be switched from 5.2 GHz to 5.4 GHz, so that the first radio frequency circuit and the second radio frequency circuit work at a same frequency, so that a signal sent by the first antenna can be received by the second antenna.

Optionally, the AP may periodically perform environment sensing, for example, perform environment sensing once every 5 minutes. Alternatively, the AP may perform environment sensing under triggering of a sensing instruction. The sensing instruction may be manually triggered on the AP, or may be a control instruction sent by another device to the AP. When the AP starts to perform environment sensing, the first radio frequency circuit and the second radio frequency circuit may be switched to a same operating frequency. Correspondingly, after the AP ends environment sensing, the operating frequencies of the first radio frequency circuit and the second radio frequency circuit may be immediately restored to original operating frequencies, to reduce impact on normal communication of the AP as much as possible.

A possibility that the first antenna and the second antenna are a same antenna is not excluded in this embodiment of this application. In this implementation, after sending the beacon frame through the first antenna, the AP may immediately switch the first antenna from the transmit antenna to the receive antenna, to wait for receiving the echo signal obtained by reflecting or scattering the sent beacon frame.

In addition to receiving the echo signal through the second antenna, the AP further receives, through the second antenna, the beacon frame (referred to as a direct signal) directly sent from the first antenna. Because it takes a specific time for a signal to be propagated in an air medium, and a propagation distance of the direct signal is far less than a propagation distance of the echo signal, for a same beacon frame, a beacon frame received by the AP for the first time through the second antenna is the direct signal, and a beacon frame received for the second time is the echo signal.

Further, after receiving the echo signal through the second antenna, the AP continues to perform the following step 403.

Step 403: The AP performs environment sensing based on the received echo signal.

Optionally, the AP may perform environment sensing based on a frequency domain feature of the received echo signal. For example, the AP may perform frequency domain sampling on the received echo signal to obtain CSI through calculation, and then perform environment sensing based on the CSI. In this implementation, the AP may reuse a communication processing link to calculate the CSI of the received signal.

Optionally, that the AP performs environment sensing based on the CSI may be that the AP collects CSI of an echo signal received within a period of time, and then senses an environment change based on a change of amplitude information and/or phase information of the CSI within the period of time. For example, continuous CSI data collected within a period of time may be analyzed in a model-based manner or a learning-based manner to sense an environment. For example, whether there is a person intrusion in an environment is determined in the mode-based manner. A training sample may be collected in advance, and a machine learning model may be trained in a supervised learning manner to obtain an intrusion detection model. The training sample includes amplitude information and phase information of CSI of an echo signal collected by the AP when there is no person intrusion in the environment, and amplitude information and phase information of CSI of an echo signal collected by the AP when there is a person intrusion in the environment. When performing environment sensing, the AP may use the amplitude information and the phase information of the CSI of the collected echo signal as an input of the intrusion detection model, to obtain a determining result output by the intrusion detection model. The determining result indicates that there is a person intrusion or no person intrusion in the environment.

Alternatively, the AP performs environment sensing based on the CSI, or the AP may collect CSI of an echo signal received within a period of time, and then upload the collected CSI to a radio controller or a server, so that the radio controller or the server senses an environment change based on amplitude information and/or phase information of the CSI within the period of time.

When receiving the echo signal, the AP needs to adjust a received signal power gain of the echo signal. If a received signal power of the echo signal is excessively low, the AP needs to amplify the received signal power of the echo signal. If the received signal power of the echo signal is excessively high, the AP needs to attenuate the received signal power of the echo signal. In this way, the received signal power of the echo signal is finally adjusted to an appropriate power, so that the AP can successfully receive the echo signal. An entire process of adjusting the received signal power gain of the echo signal by the AP is an AGC adjustment process. AGC adjustment is mainly implemented by an AGC module, a control interface, and an analog amplifier. The AGC module is usually in the baseband circuit, the analog amplifier is in the radio frequency circuit, and the control interface is a bridge connecting the baseband circuit and the radio frequency circuit, and can transfer a control signal between the baseband circuit and the radio frequency circuit. In a specific implementation, the AGC module calculates a received signal power adjustment manner, and sends a power adjustment control word to the analog amplifier through the control interface. Then, the analog amplifier adjusts an AGC level based on the power adjustment control word, to adjust the received signal power gain.

Because a transmit power and a receive power of the AP for transmitting and receiving a signal change with an environment, the AP switches the AGC level during working to receive a signal. For a same received signal, CSI of the received signal obtained through calculation is different when AGC levels are different. Based on this, an embodiment of this application provides a manner of compensating CSI data, to eliminate impact of a dynamic variable of CSI introduced by an AGC level on environment sensing as much as possible.

Optionally, the AP may perform amplitude-phase compensation on the CSI based on a preset amplitude-phase compensation relationship and an AGC level corresponding to an echo signal, where the amplitude-phase compensation relationship includes amplitude compensation values and/or phase compensation values corresponding to a plurality of AGC levels. Then, the AP performs environment sensing based on the CSI on which the amplitude and phase compensation is performed. The amplitude and phase compensation relationship may be established by controlling a transmit power of the AP and an AGC level corresponding to a received signal. When there are a large quantity of data packets in the environment, the AGC level may change greatly. CSI data compensation may be performed to improve sensing precision.

For example, the radio frequency circuit connected to the second antenna has 10 AGC levels. A transmit power of the first antenna may be fixed, and then the different AGC levels in the radio frequency circuit are used to process a signal sent by the first antenna and received by the second antenna, and calculate an amplitude and a phase of CSI of the received signal. Then, a difference between an amplitude and a phase of CSI of the received signal in one AGC level and amplitudes and phases of CSI of the received signal in other AGC levels is calculated based on the AGC level, and the difference is used as an amplitude compensation value and a phase compensation value. After receiving an echo signal through the second antenna, the AP may obtain the amplitude compensation value and the phase compensation value based on an AGC level corresponding to the echo signal, to perform amplitude and phase compensation on the CSI of the echo signal.

Alternatively, when performing environment sensing, the AP sets a power gain of the received signal of the second antenna to a fixed value, that is, a fixed AGC level, to improve sensing precision.

In this embodiment of this application, amplitude and phase compensation is performed on CSI data of the received signal, or the AGC level of the received signal is fixed, so that CSI variables introduced by a hardware channel can be reduced or avoided, thereby improving environment sensing precision.

Optionally, the AP may alternatively perform environment sensing based on time domain characteristic information of the received echo signal. For example, the AP may perform time domain in-phase quadrature (in-phase quadrature, IQ) sampling on the received echo signal, and perform operations such as cross-correlation on a sampling result to perform environment sensing. Details are not described in this embodiment of this application.

In the wireless sensing method provided in this embodiment of this application, the AP sends the beacon frame through the first antenna, receives, through the second antenna, the echo signal obtained by reflecting or scattering the beacon frame, and further performs environment sensing based on the received echo signal. In this embodiment of this application, because the AP has a capability of sending and receiving a packet, the same AP sends a beacon frame and receives an echo signal of the beacon frame. A signal transmit/receive location is always known to the AP. Therefore, environment sensing precision is improved, a deployment location of the AP is not limited, and the AP can be flexibly applied to various scenarios, thereby improving environment change robustness of a sensing algorithm. In addition, the AP implements environment sensing through the beacon frame. The beacon frame is periodically sent to announce existence of the AP. Therefore, environment sensing is implemented through the beacon frame without additional packet sending, so that channel resources can be saved, and environment sensing can be completed in a normal communication process, thereby implementing integrated communication and sensing.

A sequence of steps of the wireless sensing method provided in this embodiment of this application may be properly adjusted, or steps may be correspondingly added or deleted as required. Any method variation readily figured out by a person skilled in the art within the technical scope disclosed in this application shall fall within the protection scope of this application.

For example, in the solutions of this application, in addition to implementing environment sensing through a beacon frame, the AP may further implement environment sensing through another management frame or a proprietary frame other than the data frame, the control frame, and the beacon frame. For a specific implementation, refer to the manner of implementing environment sensing through the beacon frame that is described in the foregoing embodiment.

Optionally, the AP implements environment sensing through the data frame. A specific implementation solution is as follows: The AP sends a data frame through a first antenna, receives, through a second antenna, an echo signal obtained by reflecting or scattering the data frame, and then performs environment sensing based on the echo signal of the data frame. In this implementation, when the AP has a large quantity of services, the AP can collect a large quantity of echo signals, so that sufficient environment sensing information can be obtained to improve sensing precision.

Alternatively, the AP may implement environment sensing with reference to the data frame and the beacon frame. For example, when the AP has a large quantity of services, the AP implements environment sensing through only the data frame. When the AP has a small quantity of services, the AP may implement environment sensing through a data frame and a beacon frame. For example, the AP may increase a packet sending frequency of the beacon frame and/or increase a sending bandwidth of the beacon frame, so that the AP can receive more echo signals obtained by reflecting or scattering beacon frames by the environment, so as to obtain more environment sensing information, thereby improving sensing precision.

The following describes a virtual apparatus in embodiments of this application by using an example.

Embodiments of this application provide an AP in a WLAN. For example, FIG. 5 is a diagram of a structure of an AP according to an embodiment of this application. As shown in FIG. 5, the AP 500 includes a sending module 501, a receiving module 502, and a processing module 503.

The sending module 501 is configured to send a beacon frame through a first antenna. For a specific implementation process of the sending module 501, refer to step 401.

The receiving module 502 is configured to receive an echo signal through a second antenna, where the echo signal is obtained by reflecting or scattering the beacon frame. For a specific implementation process of the receiving module 502, refer to step 402.

The processing module 503 is configured to perform environment sensing based on the received echo signal. For a specific implementation process of the processing module 503, refer to step 403.

Optionally, the first antenna and the second antenna are different antennas that are connected to a same baseband circuit of the AP.

Optionally, the first antenna and the second antenna are respectively connected to different baseband circuits of the AP.

Optionally, the sending module 501 is specifically configured to send the beacon frame on both the primary channel and the secondary channel through the first antenna.

Optionally, the processing module 503 is specifically configured to: calculate CSI based on the received echo signal; perform amplitude and phase compensation on the CSI based on a preset amplitude and phase compensation relationship and an AGC level corresponding to the echo signal, where the amplitude and phase compensation relationship includes amplitude compensation values and/or phase compensation values corresponding to a plurality of AGC levels; and perform environment sensing based on the CSI on which the amplitude and phase compensation is performed.

For the apparatus in the foregoing embodiment, specific manners of executing operations by each module are described in detail in embodiments related to the method, and details are not described herein.

An embodiment of this application further provides an AP, including a processor, a memory, a transceiver, and a plurality of antennas.

The transceiver is configured to send a beacon frame through a first antenna in the plurality of antennas.

The transceiver is further configured to receive an echo signal through a second antenna in the plurality of antennas, where the echo signal is obtained by reflecting or scattering the beacon frame.

The processor is configured to invoke a computer program stored in the memory, to perform environment sensing based on the received echo signal.

Optionally, the transceiver is specifically configured to send the beacon frame on both the primary channel and the secondary channel through the first antenna.

Optionally, the processor is specifically configured to invoke the computer program stored in the memory, and calculate CSI based on the received echo signal; perform amplitude and phase compensation on the CSI based on a preset amplitude and phase compensation relationship and an AGC level corresponding to the echo signal, where the amplitude and phase compensation relationship includes amplitude compensation values and/or phase compensation values corresponding to a plurality of AGC levels; and perform environment sensing based on the CSI on which the amplitude and phase compensation is performed.

For example, the AP may be the AP 100 shown in FIG. 2 or FIG. 3. The computer program stored in the memory 102 may include one or more software modules. The one or more software modules may be the software modules provided in the embodiment in FIG. 5. The processor 101 is configured to invoke the computer program, and cooperate with the transceiver 103 to implement the wireless sensing method provided in the foregoing method embodiments. The transceiver 103 is configured to perform transmit and receive actions of the AP in the foregoing method embodiments. Optionally, the memory 102 is further configured to store amplitude compensation values and/or phase compensation values respectively corresponding to a plurality of AGC levels of the transceiver 103, for use by the processor 101.

An embodiment of this application further provides a computer-readable storage medium. The computer-readable storage medium stores instructions. When the instructions are executed by a processor, the wireless sensing method in the foregoing method embodiments is implemented.

A person of ordinary skill in the art may understand that all or some of the steps of the embodiments may be implemented by hardware or a program instructing related hardware. The program may be stored in a computer-readable storage medium. The storage medium may be a read-only memory, a magnetic disk, an optical disc, or the like.

In embodiments of this application, the terms "first", "second", and "third" are merely used for description, but shall not be understood as an indication or implication of relative importance.

The term "and/or" in this application describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

It should be noted that information (including but not limited to user equipment information, user personal information, and the like), data (including but not limited to data for analysis, data for storage, data for display, and the like), and signals in this application are all authorized by users or fully authorized by all parties, and collection, use, and processing of related data need to comply with related laws, regulations, and standards of related countries and regions.

The foregoing descriptions are merely optional embodiments of this application, but are not intended to limit this application. Any modification, equivalent replacement, improvement, or the like made within the concept and principle of this application shall fall within the protection scope of this application.

## Claims

1. A wireless sensing method, wherein the method comprises:
sending, by an access point AP in a wireless local area network WLAN, a beacon frame through a first antenna;
receiving, by the AP, an echo signal through a second antenna, wherein the echo signal is obtained by reflecting or scattering the beacon frame; and
performing, by the AP, environment sensing based on the received echo signal.

2. The method according to claim 1, wherein the first antenna and the second antenna are different antennas that are connected to a same baseband circuit of the AP.

3. The method according to claim 1, wherein the first antenna and the second antenna are respectively connected to different baseband circuits of the AP.

4. The method according to any one of claims 1 to 3, wherein sending, by the AP, the beacon frame through the first antenna comprises:
sending, by the AP, the beacon frame on both a primary channel and a secondary channel through the first antenna.

5. The method according to any one of claims 1 to 4, wherein performing, by the AP, environment sensing based on the received echo signal comprises:
calculating, by the AP, channel state information CSI based on the received echo signal;
performing, by the AP, amplitude and phase compensation on the CSI based on a preset amplitude and phase compensation relationship and an automatic gain control AGC level corresponding to the echo signal, wherein the amplitude and phase compensation relationship comprises amplitude compensation values and/or phase compensation values corresponding to a plurality of AGC levels; and
performing, by the AP, environment sensing based on the CSI on which the amplitude and phase compensation is performed.

6. An access point AP in a wireless local area network WLAN, comprising:
a sending module, configured to send a beacon frame through a first antenna;
a receiving module, configured to receive an echo signal through a second antenna, wherein the echo signal is obtained by reflecting or scattering the beacon frame; and
a processing module, configured to perform environment sensing based on the received echo signal.

7. The AP according to claim 6, wherein the first antenna and the second antenna are different antennas that are connected to a same baseband circuit of the AP.

8. The AP according to claim 6, wherein the first antenna and the second antenna are respectively connected to different baseband circuits of the AP.

9. The AP according to any one of claims 6 to 8, wherein the sending module is configured to:
send the beacon frame on both a primary channel and a secondary channel through the first antenna.

10. The AP according to any one of claims 6 to 9, wherein the processing module is configured to:
calculate channel state information CSI based on the received echo signal;
perform amplitude and phase compensation on the CSI based on a preset amplitude and phase compensation relationship and an automatic gain control AGC level corresponding to the echo signal, wherein the amplitude and phase compensation relationship comprises amplitude compensation values and/or phase compensation values corresponding to a plurality of AGC levels; and
perform environment sensing based on the CSI on which the amplitude and phase compensation is performed.

11. An access point AP in a wireless local area network WLAN, comprising: a processor, a memory, a transceiver, and a plurality of antennas, wherein
the transceiver is configured to send a beacon frame through a first antenna in the plurality of antennas;
the transceiver is further configured to receive an echo signal through a second antenna in the plurality of antennas, wherein the echo signal is obtained by reflecting or scattering the beacon frame; and
the processor is configured to invoke a computer program stored in the memory, to perform environment sensing based on the received echo signal.
